# FASCICULE DE BREVET EUROPEEN

(11) **EP 2 485 935 B1**
(45) Date de publication et mention de la délivrance du brevet: **06.11.2013**
(21) Numéro de dépôt: 10763827.2
(22) Date de dépôt: 07.09.2010
(51) Int. Cl.: B62D 25/20

(54) **DISPOSITIF DE PROTECTION CONTRE LES CHOCS D'UN ORGANE DE VEHICULE AUTOMOBILE MONTE SOUS CAISSE**
STOSSDÄMPFENDE VORRICHTUNG FÜR EIN UNTER DEM FAHRZEUGRAHMEN MONTIERTES KRAFTFAHRZEUGELEMENT
ANTI-SHOCK DEVICE FOR A MOTOR VEHICLE MEMBER MOUNTED UNDER THE FRAME

(30) Priorité: 06.10.2009 FR 0956942
(43) Date de publication de la demande: 15.08.2012
(73) Titulaire: Renault S.A.S., 92100 Boulogne-Billancourt (FR)
(72) Inventeur: CABO, José, F-78640 Saint Germain de la Grange / Chatron (FR)
(86) Numéro de dépôt international: PCT/FR2010/051859
(87) Numéro de publication internationale: WO 2011/042633

(56) Documents cités:
- FR-A- 2 890 366
- US-A- 5 612 606
- US-A1- 2007 128 507

## Description

La présente invention concerne un dispositif de protection contre les chocs d'un organe de véhicule automobile monté saillant sous la caisse du véhicule automobile.

L'invention s'applique notamment à la protection de batterie de traction pour véhicule automobile.

Une batterie de traction pour véhicule automobile est prévue pour être montée sous la caisse du véhicule automobile, au niveau d'une zone sous caisse s'étendant vers l'avant du véhicule à partir d'une paroi de fond de coffre du véhicule automobile. La batterie de traction peut être suspendue sous la caisse du véhicule automobile de sorte que, selon les configurations de caisse de véhicule et/ou de batterie, cette dernière peut se retrouver dans une position sous caisse proéminente selon l'axe vertical du véhicule telle qu'elle n'est alors protégée par aucun autre organe en amont du véhicule automobile et, en particulier, par aucun élément de structure de caisse, susceptible d'offrir une protection à la batterie à l'égard d'obstacles au sol présentant à la fois une hauteur inférieure à la paroi de fond de coffre et une hauteur supérieure au point bas de la batterie de traction. Cette configuration entraîne des risques pour l'intégrité physique de la batterie de traction lors de certaines manoeuvres du véhicule automobile, par exemple, lors du recul sur un trottoir ou vers une borne.

Un exemple dudit dispositif de protection est connu du document FR-A-2890366 qui comporte les caractéristiques du préambule de la revendication 1.

En outre, dans le cas où cette batterie est rendue amovible afin d'être remplacée par exemple dans une station d'échange de batterie du type de celle décrite dans le document US 5,612,606, la contrainte de laisser un accès aisé à la batterie de traction, qui doit pouvoir être démontée rapidement et facilement, empêche de prévoir un élément de protection qui serait implanté directement sous la batterie de traction.

Dans ce contexte, l'invention a pour but de prévoir un dispositif de protection d'un organe de véhicule automobile monté saillant sous caisse, destiné à protéger cet organe contre des chocs sous caisse, c'est-à-dire des chocs résultant d'obstacles au sol plus hauts que son point bas selon l'axe vertical du véhicule, tels que des plots, bornes, trottoirs, susceptibles de se produire lors de certaines manoeuvres du véhicule automobile.

A cette fin, le dispositif de l'invention, par ailleurs conforme à la définition générique qu'en donne le préambule ci-dessus, est essentiellement caractérisé en ce qu'il comprend un élément de carénage adapté à être solidarisé à au moins un élément de structure de caisse dudit véhicule automobile situé entre une extrémité dudit véhicule automobile depuis laquelle un obstacle peut surgir lors d'une manoeuvre du véhicule automobile et ledit organe de véhicule automobile, ledit élément de carénage comprenant une surface d'appui inférieure s'étendant sous caisse sensiblement entre ladite extrémité du véhicule automobile et ledit organe de véhicule automobile selon une pente négative, de sorte que le point bas de ladite surface d'appui est plus bas que le point bas dudit organe de véhicule automobile selon un axe vertical dudit véhicule automobile.

Selon un mode de réalisation, l'élément de carénage est adapté à être monté solidaire d'une face externe d'une paroi inférieure de fond de coffre du véhicule automobile.

Selon un mode de réalisation particulier, l'élément de carénage est adapté à être monté solidaire de longerons du véhicule automobile.

Selon ce mode de réalisation particulier, l'élément de carénage peut comprendre des moyens de liaison s'étendant de part et d'autre de la surface d'appui inférieure dudit élément de carénage, de sorte à être adapté à venir en appui contre une face inférieure des longerons du véhicule automobile.

La pente de la surface d'appui inférieure dudit élément de carénage peut être comprise entre 1 ° et 45° et, de préférence, est sensiblement égale à 5°.

De préférence, ledit élément de carénage est adapté à être solidarisé à au moins un élément de structure de caisse dudit véhicule automobile situé entre une extrémité arrière dudit véhicule automobile et ledit organe de véhicule automobile, de sorte à protéger l'organe des chocs lorsque le véhicule subit des manoeuvres de recul.

Grâce à cet agencement, le dispositif de protection de l'invention est implanté à l'arrière du véhicule de sorte qu'il soit placé entre un obstacle potentiel situé dans le champ arrière du véhicule automobile et l'organe de véhicule automobile monté sous caisse, au cours des manoeuvres du véhicule automobile pour lesquelles l'organe doit être protégé. En outre, le dispositif de protection de l'invention présente une surface d'appui inférieure sous caisse formant une rampe à pente négative, sur laquelle l'obstacle est avantageusement amené à glisser au cours des manoeuvres du véhicule, de sorte à permettre de soulever le véhicule automobile par contact avec l'obstacle, et donc, en même temps, de soulever l'organe de véhicule automobile monté sous caisse au dessus de l'obstacle.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

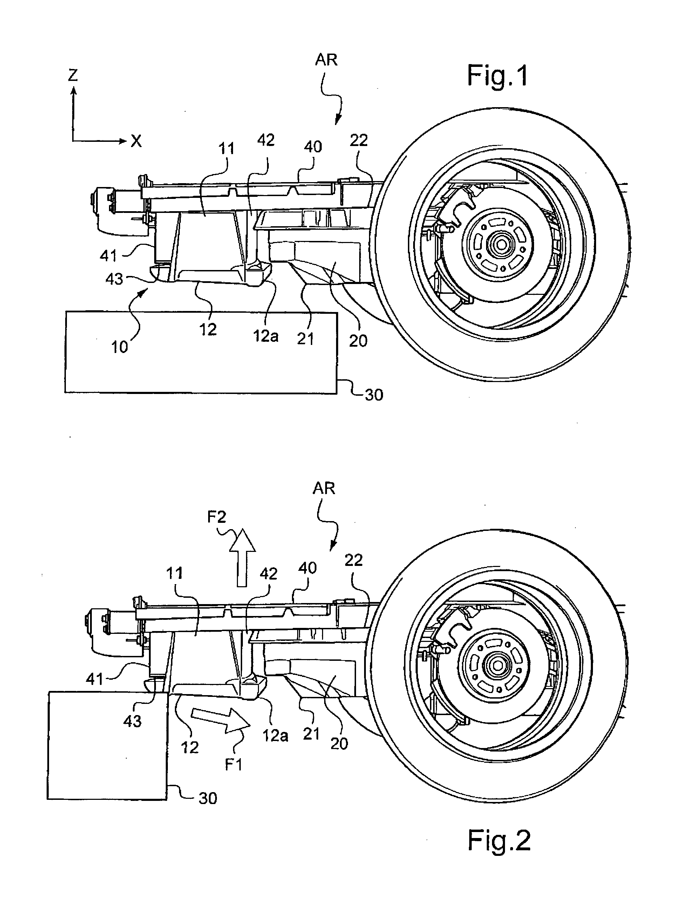

- la Figure 1 est une vue de côté de l'arrière d'un véhicule automobile où est implanté le dispositif de protection selon l'invention, dans une première configuration « au repos », où aucune contrainte n'est exercée sur le dispositif de protection (obstacle de hauteur inférieure en Z au point bas de l'organe) ;
- la Figure 2 est une vue de côté de l'arrière d'un véhicule automobile où est implanté le dispositif de protection selon l'invention, dans une seconde configuration « de travail », où une contrainte est exercée sur le dispositif de protection (obstacle de hauteur supérieure en Z au point bas de l'organe) ;

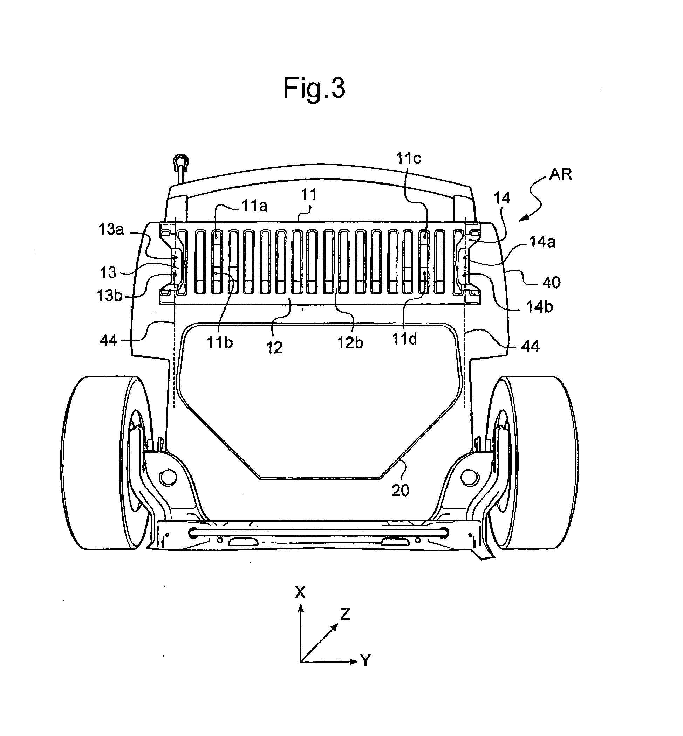

- la Figure 3 est une vue de dessous illustrant un exemple d'implantation du dispositif de protection selon l'invention à l'arrière d'un véhicule automobile, en amont de l'organe à protéger.

La Figure 1 illustre donc une partie arrière AR de véhicule automobile et, en particulier une partie de structure de caisse 40 située entre l'extrémité arrière du véhicule automobile et le train arrière du véhicule. Cette partie de structure de caisse 40 intègre un fond de coffre constitué d'un bac de coffre 41 rapporté sur la caisse, réalisé par exemple en matière plastique. Cependant, le fond de coffre pourrait aussi être constitué directement par la tôle de la caisse formant la paroi de fond de caisse 42.

Une batterie de traction 20 est montée sous caisse sur un élément de la structure de caisse du véhicule automobile s'étendant vers l'avant du véhicule automobile à partir du fond de coffre. Plus précisément, la batterie de traction 20 est montée de manière amovible sur la paroi de fond de caisse 42 et est par exemple fixée sous la caisse au niveau des longerons, de sorte que la batterie de traction 20 est positionnée saillante vers le bas selon l'axe vertical Z du véhicule automobile, par rapport aux autres éléments de la structure de caisse et, en particulier, par rapport à la paroi inférieure 43 de fond de coffre 41.

Pour protéger la batterie de traction 20 d'obstacles susceptibles de passer sous le fond de coffre lors de manoeuvres de recul du véhicule et dont la hauteur est telle que l'obstacle est plus haut en Z que le point bas 21 de la batterie de traction constitué par le fond de la batterie, un dispositif de protection 10 contre les chocs arrière est implanté plus en arrière du véhicule par rapport à l'implantation de la batterie de traction.

Plus précisément, le dispositif de protection contre les chocs arrière est constitué d'un élément de carénage 11 destiné à être solidarisé à un élément de structure de caisse du véhicule automobile situé entre l'extrémité arrière du véhicule automobile et la batterie de traction 20, de sorte qu'il soit placé entre l'obstacle et la batterie dans les manoeuvres pour lesquelles on souhaite protéger la batterie.

La fonction de l'élément de carénage 11 formant le dispositif de protection contre les chocs arrière est de soulever le véhicule automobile par contact avec l'obstacle, jusqu'à pouvoir soulever la batterie de traction au-dessus de l'obstacle.

Pour ce faire, l'élément de carénage 11 comprend une surface d'appui inférieure 12 s'étendant sous caisse sensiblement entre l'extrémité arrière du véhicule automobile et la batterie de traction selon une pente négative, ou autrement dit, la surface d'appui inférieure 12 fait un angle à partir d'un axe longitudinal X du véhicule automobile dans un sens de parcours anti-trigonométrique. Ainsi, le point bas 12a de la surface d'appui 12 est situé vers l'avant du véhicule et plus bas que le point bas 21 de la batterie de traction 20 implanté sous caisse en aval de l'élément de carénage 11.

L'élément de carénage 11 présente ainsi une forme de rampe à pente négative, permettant à l'obstacle de glisser sur lui et ainsi de soulever le véhicule automobile et, en particulier, la batterie de traction 20, au-dessus de l'obstacle. On évite ainsi un arrêt brutal du véhicule selon l'axe longitudinal X, ce qui pourrait mettre en péril le confort et la sécurité des occupants, le véhicule étant stoppé progressivement sur l'obstacle permettant d'alerter le conducteur de la présence de l'obstacle.

A cet effet, la pente de la surface d'appui inférieure 12 de l'élément de carénage devra être la plus faible possible pour maximiser les efforts selon l'axe vertical Z du véhicule automobile, qui sont en partie pris en charge par les ressorts du train arrière et par des éléments de structure capacitaire pour subir voire encaisser ces efforts (longerons, bac de coffre) et les minimiser selon l'axe longitudinal X du véhicule automobile où il moins aisé de transmettre les efforts. La pente sera avantageusement choisie dans une plage de valeurs comprises entre 1 ° et 45° et sera choisie de préférence sensiblement égale à 45°.

Selon un mode de réalisation, l'élément de carénage 11 est de préférence fixé sur la face externe de la paroi inférieure 43 de fond de coffre constitué par le bac de coffre 41, côté extérieur du véhicule, par exemple au moyen de quatre vis de fixation, respectivement 11a à 11 d, comme illustré à la figure 3. En outre, la surface d'appui inférieure 12 de l'élément de carénage 11 peut être configurée de sorte à présenter une série de murets 12b symétriques de ceux du bac de coffre, qui assurent la reprise d'efforts suivant l'axe X. Ce mode de fixation de l'élément de carénage par quatre vis sur la paroi inférieure du bac de coffre couplé au dessin de murets de repris d'effort en X symétrique de ceux du bac de coffre permet d'encaisser efficacement les efforts résiduels en X lors du contact avec l'obstacle.

L'élément de carénage 11 peut en outre être muni de deux appendices 13 et 14 formant des moyens de liaison adaptés pour venir s'appuyer sur la face inférieure des longerons 44 et permettre ainsi une voie de passage des efforts exercés sur l'élément de carénage 11. Ces appendices forment des prolongations de l'élément de carénage 11 de part et d'autre de la surface d'appui inférieure 12 montée sur le bac de coffre 41 et sont fixés aux longerons par exemple au moyen de vis de fixation, respectivement 13a, 13b et 14a, 14b.

L'élément de carénage et son environnement, en particulier le bac de coffre, doivent être suffisamment rigides pour supporter le poids du véhicule automobile à l'arrière selon l'axe Z et la résultante selon l'axe X liée à la pente de la surface d'appui, ainsi que pour pouvoir absorber l'énergie cinétique à l'impact avec l'obstacle.

La figure 1 illustre le cas où un obstacle 30 possède une hauteur telle qu'il passe sous la batterie de traction 20 dans les manoeuvres du véhicule automobile pour lesquelles on souhaite protéger cette dernière. Dans ce cas, aucune contrainte n'est exercée sur l'élément de carénage 11.

A l'inverse, la figure 2 illustre le cas où un obstacle 30 possède une hauteur telle qu'il est plus haut que le fond de la batterie 21 selon l'axe Z. Ainsi, lors d'une manoeuvre de recul du véhicule automobile sur cet obstacle 30, lorsque ce dernier entre en contact avec l'élément de carénage 11, il vient appuyer sur celui-ci en glissant sur la rampe formée par surface d'appui inférieure 12, dans la direction symbolisée par la flèche F1. Comme indiqué précédemment, l'élément de carénage 11 sert alors d'appui à l'obstacle 30 pour soulever le véhicule et la batterie à travers le bac de coffre et les longerons, selon la direction symbolisée par la flèche F2. La fin de la rampe définie par le point bas 12a de la surface d'appui inférieure 12 étant configurée pour être toujours plus basse que le fond de la batterie 21 selon l'axe vertical Z du véhicule automobile, cela garantit que l'obstacle 30 avancera dans la direction F1 en étant toujours plus bas que le fond de la batterie et cela, tant qu'il glissera sur la rampe formée par la surface d'appui inférieure 12.

L'élément de carénage 11 doit donc être dimensionné, en particulier selon l'axe Z, de sorte que même après déformation élastique de celui-ci et déformation plastique de l'environnement (fond de coffre), la côte résiduelle en Z de la fin de rampe relativement au fond de la batterie permette toujours de soulever la batterie au-dessus de l'obstacle. Aussi, pour tenir compte de ces déformations et s'assurer d'avoir une fin de rampe de l'élément de carénage qui soit toujours plus basse en Z que le fond de la batterie, l'élément de carénage 11 sera dimensionné en Z au-delà du besoin fonctionnel, de la valeur de la déformation de l'ensemble élément de carénage et environnement.

Par contre, la dimension en Z de l'élément de carénage et la pente de la rampe formée par sa surface d'appui inférieure devront rester compatibles avec la garde au sol du véhicule pour ne pas rentrer en contact avec des profils de route de type rampe de parking, par exemple.

L'élément de carénage pourra également avantageusement remplir une fonction d'alerte du conducteur, en générant un signal (bruit, vibration) lors de son contact avec l'obstacle et ce, avant que dernier ne soit au droit de la batterie. Ainsi, à la détection du bruit ou des vibrations, le conducteur pourra actionner le frein et repartir en marche avant pour se libérer de l'obstacle, qui glissera dans le sens opposé à la direction F1 sur la surface d'appui inférieure de l'élément de carénage.

L'élément de carénage du dispositif de protection selon l'invention étant situé dans le flux aérodynamique sous caisse, sa forme extérieure pourra être adaptée de manière à canaliser l'air et générer le minimum de trainée.

La présente description a été faite en relation à l'application sur un véhicule automobile visant à protéger une batterie de traction montée sous caisse contre les chocs arrière lors de certaines manoeuvres du véhicule, mais le dispositif de l'invention peut s'appliquer, de façon générale, à la protection de tout organe monté sous un véhicule automobile contre des obstacles plus haut en Z que le point bas de l'organe et pour lequel on ne pourrait pas implanter facilement un protecteur directement sous l'organe, tel qu'un pont arrière de 4x4, un différentiel, un réservoir, etc.

## Revendications

1. Dispositif de protection contre les chocs d'un organe (20) de véhicule automobile monté saillant sous caisse, **caractérisé en ce qu'**il comprend un élément de carénage (11) adapté à être solidarisé à au moins un élément de structure de caisse dudit véhicule automobile situé entre une extrémité dudit véhicule automobile depuis laquelle un obstacle peut surgir lors d'une manoeuvre du véhicule automobile et ledit organe de véhicule automobile, **caractérisé en ce que** ledit élément de carénage comprend une surface d'appui inférieure (12) s'étendant sous caisse sensiblement entre ladite extrémité du véhicule automobile et ledit organe de véhicule automobile selon une pente négative, de sorte que le point bas (12a) de ladite surface d'appui inférieure est plus bas que le point bas (21) dudit organe de véhicule automobile selon un axe vertical (Z) dudit véhicule automobile.

2. Dispositif de protection selon la revendication 1, **caractérisé en ce que** l'élément de carénage (11) est adapté à être monté solidaire d'une face externe d'une paroi inférieure (43) de fond de coffre (41) du véhicule automobile.

3. Dispositif selon la revendication 1 ou 2, **caractérisé en ce que** l'élément de carénage (11) est adapté à être monté solidaire de longerons (44) du véhicule automobile.

4. Dispositif selon la revendication 3, **caractérisé en ce que** l'élément de carénage (11) comprend des moyens de liaison (13, 14) s'étendant de part et d'autre de la surface d'appui inférieure (12) dudit élément de carénage, de sorte à être adaptés à venir en appui contre une face inférieure des longerons (44) du véhicule automobile.

5. Dispositif selon l'une quelconque des revendications 1 à 4, **caractérisé en ce que** la pente de la surface d'appui inférieure (12) de l'élément de carénage (11) est comprise entre 1° et 45° et, de préférence, est sensiblement égale à 5°.

6. Dispositif selon l'une quelconque des revendications 1 à 5, **caractérisé en ce que** ledit élément de carénage (11) est adapté à être solidarisé à au moins un élément de structure de caisse dudit véhicule automobile situé entre une extrémité arrière dudit véhicule automobile et ledit organe (20) de véhicule automobile, de sorte à protéger l'organe (20) des chocs lorsque le véhicule subit des manoeuvres de recul.

## Patentansprüche

1. Stoßschutzvorrichtung eines am Unterboden vorstehend montierten Kraftfahrzeugbauteils (20), **dadurch gekennzeichnet, dass** sie ein Verkleidungselement (11) enthält, das geeignet ist, um mit mindestens einem Karosserie-Strukturelement des Kraftfahrzeugs fest verbunden zu werden, das sich zwischen einem Ende des Kraftfahrzeugs, von dem aus ein Hindernis bei einem Rangieren des Kraftfahrzeugs auftauchen kann, und dem Kraftfahrzeugbauteil befindet, **dadurch gekennzeichnet, dass** das Verkleidungselement eine untere Auflagefläche (12) enthält, die sich am Unterboden im Wesentlichen zwischen dem Ende des Kraftfahrzeugs und dem Kraftfahrzeugbauteil gemäß einer derartigen negativen Neigung befindet, dass der tiefe Punkt (12a) der unteren Auflagefläche gemäß einer senkrechten Achse (Z) des Kraftfahrzeugs tiefer ist als der tiefe Punkt (21) des Kraftfahrzeugbauteils.

2. Schutzvorrichtung nach Anspruch 1, **dadurch gekennzeichnet, dass** das Verkleidungselement (11) geeignet ist, um mit einer Außenseite einer Unterwand (43) des Kofferraumbodens (41) des Kraftfahrzeugs fest verbunden montiert zu werden.

3. Vorrichtung nach Anspruch 1 oder 2, **dadurch gekennzeichnet, dass** das Verkleidungselement (11) geeignet ist, um mit Längsträgern (44) des Kraftfahrzeugs fest verbunden montiert zu werden.

4. Vorrichtung nach Anspruch 3, **dadurch gekennzeichnet, dass** das Verkleidungselement (11) Verbindungseinrichtungen (13, 14) enthält, die sich zu beiden Seiten der unteren Auflagefläche (12) des Verkleidungselements erstrecken, so dass sie geeignet sind, um gegen eine Unterseite der Längsträger (44) des Kraftfahrzeugs in Auflage zu kommen.

5. Vorrichtung nach einem der Ansprüche 1 bis 4, **dadurch gekennzeichnet, dass** die Neigung der unteren Auflagefläche (12) des Verkleidungselements (11) zwischen 1° und 45° liegt und vorzugsweise im Wesentlichen gleich 5° ist.

6. Vorrichtung nach einem der Ansprüche 1 bis 5, **dadurch gekennzeichnet, dass** das Verkleidungselement (11) geeignet ist, um mit mindestens einem Karosserie-Strukturelement des Kraftfahrzeugs fest verbunden zu werden, das sich zwischen einem hinteren Ende des Kraftfahrzeugs und dem Kraftfahrzeugbauteil (20) befindet, um das Bauteile (20) vor den Stößen zu schützen, wenn das Fahrzeug rückwärts rangiert wird.

## Claims

1. Impact protection device for a motor-vehicle member (20) mounted protrudingly beneath the body thereof, **characterized in that** it includes a fairing element (11) designed to be rigidly connected to at least one structural body element of said motor vehicle located between one extremity of said motor vehicle from which an obstacle may appear during a manoeuvre of the motor vehicle and said motor-vehicle member, **characterized in that** said fairing element comprises a lower support surface (12) extending beneath the body substantially between said extremity of the motor vehicle and said motor-vehicle member along a negative incline, such that the low point (12a) of said lower support surface is lower than the low point (21) of said motor-vehicle member along a vertical axis (Z) of said motor vehicle.

2. Protection device according to Claim 1, **characterized in that** the fairing element (11) is designed to be rigidly connected to an external face of a bottom cover plate (43) of the luggage compartment back (41) of the motor vehicle.

3. Device according to Claim 1 or 2, **characterized in that** the fairing element (11) is designed to be rigidly connected to spars (44) of the motor vehicle.

4. Device according to Claim 3, **characterized in that** the fairing element (11) includes linking means (13, 14) extending from either side of the lower support surface (12) of said fairing element, so as to be able to bear against a lower face of the spars (44) of the motor vehicle.

5. Device according to any one of Claims 1 to 4, **characterized in that** the incline of the lower support surface (12) of the fairing element (11) is between 1° and 45° and is preferably approximately 5°.

6. Device according to any one of Claims 1 to 5, **characterized in that** said fairing element (11) is designed to be rigidly connected to at least one structural body element of said motor vehicle located between a rear extremity of said motor vehicle and said motor-vehicle member (20), so as to protect the member (20) from impacts when the vehicle is reversing.
